# EUROPEAN PATENT SPECIFICATION

(11) **EP 4 640 116 B1**
(45) Date of publication and mention of the grant of the patent: **21.10.2026**
(21) Application number: 24382458.8
(22) Date of filing: 25.04.2024
(51) Int. Cl.: A47J 19/02, A47J 19/06, A23L 2/02, A23L 2/56, A23L 2/70, A47J 31/00

(54) **PREPARATION DEVICE FOR PREPARING A FLAVOURED BEVERAGE, COMPRISING A SHEARING UNIT FOR INCREASING THE SURFACE EXPOSED TO ULTRASONIC WAVES**
ZUBEREITUNGSVORRICHTUNG ZUR ZUBEREITUNG EINES AROMATISIERTEN GETRÄNKS MIT EINER SCHEREINHEIT ZUR ERHÖHUNG DER OBERFLÄCHE, DIE ULTRASCHALLWELLEN AUSGESETZT IST
DISPOSITIF DE PRÉPARATION D'UNE BOISSON AROMATISÉE, COMPRENANT UNE UNITÉ DE CISAILLEMENT POUR AUGMENTER LA SURFACE EXPOSÉE AUX ONDES ULTRASONORES

(43) Date of publication of application: 29.10.2025
(73) Proprietor: BSH Hausgeräte GmbH, 81739 München (DE)
(72) Inventor: Diaz de Marco, Elena, 41001 Sevilla (ES); Romero Zubeldia, Inko, 50005 Zaragoza (ES); Alaman Aguilar, Jorge, 50012 Zaragoza (ES); Merz, Manuel, 73430 Aalen (DE)

(56) References cited:
- WO-A1-2016/207846
- CN-A- 113 182 031
- CN-U- 216 393 818
- KR-A- 20140 039 044

## Description

The invention relates to a preparation device for preparing a flavoured beverage. The preparation device comprises a container for a liquid of the beverage and an ultrasound generating unit. The ultrasound generating unit is configured to produce ultrasonic waves in the liquid. A shearing unit of the preparation device is configured to penetrate into an object which can be placed within the container for dispensing flavour into the liquid.

Many consumers are interested in consuming healthy drinks or beverages, in particular beverages in the form of flavoured water. Additionally, consumers show an increased awareness regarding a healthy diet and healthy habits as well as for natural ingredients. Further, it is important for consumers to be able to prepare flavoured beverages according to individual preferences and in a convenient manner.

If a consumer intends to consume flavoured water, the consumer has a variety of alternatives. For example, the consumer can prepare an infusion, in particular by putting fruits and/or herbs into the water and letting the fruits and/or herbs dispense their flavour into the water. Alternatively, the consumer can buy commercially flavoured water in bottles. The first solution usually requires a lot of time in order to allow the fruit to transmit sufficient flavour to the water. It can take several hours until the flavour of the water corresponds to what the consumer expects. The second solution is expensive and requires recurrent purchases of the flavoured water in bottles. Additionally, such commercially flavoured beverages are often not as natural as it would be the case, if the fruit was directly placed in the water.

Document KR 2014 0039044 A discloses a beverage cartridge with a container. The container is arranged to cause movements of a beverage in the cartridge relative to the container in response to an oscillating motion of a drive system.

Document KR 101736220 B1 describes an apparatus for preparing ginseng products. The apparatus comprises a crushing blade that can rotate at a high speed for crushing the ginseng in order to extract ginseng ingredients into water contained in a cylinder of the apparatus. The apparatus further comprises an ultrasonic wave terminal to improve the extracting action.

However, by grinding or crushing the object in form of the ginseng, the obtained product is more like a slurry than like a flavoured beverage.

It is an object of the present invention to specify a preparation device of the initially mentioned kind, which is particularly well adapted for obtaining flavoured beverages.

This object is solved by a preparation device having the features of claim 1. Advantageous configurations with convenient further developments of the invention are specified in the dependent claims and in the following description.

The preparation device according to the invention for preparing a flavoured beverage comprises a container for a liquid of the beverage and an ultrasound generating unit configured to produce ultrasonic waves in the liquid. A shearing unit of the preparation device is configured to penetrate into an object which can be placed within the container for dispensing flavour into the liquid. The preparation device comprises a retaining unit configured for holding the object in place during the application of the shearing unit to the object. The retaining unit is configured for separating at least one piece of the object from the flavoured beverage. The object is a fruit.

The retaining unit makes it very simple to utilize any object a consumer or user of the preparation device intends to use for flavouring the liquid. In particular, the consumer or user can place a fruit in the retaining unit in order to dispense fruit flavour into the liquid of the beverage, wherein the liquid can in particular be or comprise water. As the retaining unit is configured for separating at least pieces of the fruit from the flavoured beverage, the retaining unit prevents the entire object or fruit from being mixed with the liquid for example in form of water. Consequently, the object, in particular in form of the at least one fruit, can be utilized to flavour liquid without the entire fruit being mixed with the liquid, as it would be the case in a smoothie maker. The user or consumer can therefore extract flavour from the object and have the flavour be dispensed into the liquid without necessarily obtaining a slurry. This is due to the fact that the retaining unit can be utilized to remove the object, in particular in the form of at least one fruit, from the flavoured beverage. This can be done even if the shearing unit has been utilized to penetrate into the object, in particular into the at least one fruit, while the object was held in place during the application of the shearing unit to the object. Therefore, the preparation device is particularly well adapted for obtaining flavoured beverages.

Advantageously, the preparation device enables the user to prepare a flavoured beverage in a quick, fresh and personalized manner. In particular if the user utilizes at least one fruit as the object that is placed in the retaining unit, a natural and healthy, fruit flavoured beverage can be obtained in a particularly simple manner. Further, as the user can choose natural ingredients as the object that is placed in the retaining unit, a self-made flavoured beverage can be obtained in an easy way. This is beneficial for preparing natural and healthy beverages.

The ultrasound generating unit is configured to produce ultrasonic waves in the liquid. This can be achieved by applying an electrical signal to the ultrasound generating unit. The operation of the ultrasound generating unit results in the creation of compression waves in the liquid, which lead to a cavitation effect. Generally, ultrasonic waves generate micro impacts on the item that is subjected to the ultrasonic waves.

In the case of the liquid, the ultrasonic waves create a large number of microscopic bubbles or cavitations, which expand and then collapse and thus release an enormous energy. The application of ultrasonic waves to the object immersed in the liquid, in particular to the at least one fruit immersed in water, therefore greatly enhances the dispensing of flavour from the object, in particular from the at least one fruit, into the liquid. This is in particular valid in comparison to an infusion process in which the object or at least one fruit is simply immersed in the liquid in particular in the form of water. Therefore a higher quantity of flavour from the object, in particular in the form of the at least one fruit, can be transferred into the liquid, in particular into the water.

The utilization of the shearing unit largely increases the specific surface of the object that is in contact with the liquid in which the ultrasonic waves are produced. For this purpose the shearing unit preferably has at least one piercing element and/or at least one cutting element configured to penetrate into the object. As the object is at least one fruit, the fruit is damaged as the shearing unit penetrates into the fruit. Thus a particularly large surface of the fruit is exposed to the liquid, which can in particular be water.

In the case of utilizing the at least one fruit as the object and water as the liquid a particularly large surface of the fruit can be brought in contact with the water by applying the shearing unit to the object. This results in a particularly large surface of the fruit being exposed to the ultrasonic waves. Consequently, a particularly large amount of elements and of flavour con be transferred from the fruit to the water.

In particular, the flavoured beverage can be readily adapted to the specific intention of the user of the preparation device. Thus, the user can readily personalize the flavour of the beverage. The user can for example select the at least one object, in particular at least one fruit, to be placed in the retaining unit. Further, the intensity of letting at least a part of the shearing unit penetrate into the object can be preferably adjusted by the user.

Still further, the user can decide for how long the ultrasound generating unit is supplied with electrical energy in order to produce the ultrasonic waves in the liquid during the operation of the preparation device. In this way, the user can readily tune the flavour intensity and/or the colour of the prepared flavoured beverage. This is advantageous with respect to preparing flavoured beverages in a very individual way.

It is advantageous that the preparation device can easily be reused for flavouring respective amounts of liquid with different objects, in particular with different fruits. Therefore, there is no need of recurrent expenses as it would be the case, if the user bought commercially flavoured water in bottles.

Further, the user can drink the flavoured beverage right after its preparation. In other words, there is no need of storing the beverage before its consumption. Therefore, the user can benefit from the fresh preparation of the flavoured beverage.

In particular compared to a preparation method, in which the flavoured beverage is obtained by infusing a fruit in water, the preparation time can be drastically reduced by utilizing the preparation device. This is due to the fact that the preparation device comprises the ultrasound generating unit configured to produce the ultrasonic waves in the liquid, and the shearing unit, which enables to increase the surface of the fruit exposed to the ultrasonic waves.

Preferably, the shearing unit is movable relative to the retaining unit in a height direction of the container during the application of the shearing unit to the object. This allows to very finely control the penetration of at least one part of the shearing unit into the object during the operation of the preparation device. In particular, it can be avoided that the entire object is cut or separated into many pieces by shearing elements of the shearing unit. This is in particular beneficial for separating the remainder of the object from the flavoured beverage by taking the retaining unit out of the container for the flavoured liquid.

Preferably, a linear movement of the shearing unit relative to the retaining unit can be effected by a user of the preparation device by pushing at least one of the shearing unit and the retaining unit. Accordingly, the user can apply a force to the shearing unit and/or to the retaining unit in order to make at least elements of the shearing unit penetrate into the object. Such a mechanical operation of the preparation device is particularly beneficial for a low energy consumption of the preparation device during its operation.

Further, the user can adjust how much he pushes the shearing unit and/or the retaining unit to effect the linear movement of the shearing unit relative to the retaining unit. The user can therefore in particular observe how the shearing unit interacts with the object in order to increase the specific surface of the object to be in contact with the liquid to which the ultrasonic waves are applied. This allows the user to specifically adjust a flavour intensity of the flavoured beverage.

Preferably the preparation device comprises a return element configured to move the at least one of the shearing unit and the retaining unit into a starting position when the user stops the pushing. This makes the preparation device particularly easy and save to operate.

The return element can in particular be configured as a return spring that applies a force to the shearing unit and/or the retaining unit in its compressed state, wherein the compressed state of the return spring is due to the pushing of the shearing unit and/or the retaining unit by user of the preparation device. Utilizing a return spring as the return element makes the preparation device particularly simple with regards to its construction.

Preferably, the shearing unit comprises a plurality of pin-shaped elements configured to penetrate into the object upon a movement of the shearing unit relative to the retaining unit. The pin-shaped elements in particular in the form of needles and/or nails allow a very simple increase of the surface of the object to be exposed to the water to which the ultrasonic waves can be applied during the operation of the preparation device. Further, the pin-shaped elements are particularly well suited for preventing a complete damage of the object or an undesirably intense cutting operation. In other words, a particularly high integrity of the object can be maintained, if the shearing unit has the pin-shaped elements that penetrate into the object upon the movement of the shearing unit relative to the retaining unit. This is advantageous.

Preferably, the preparation device comprises a cover element with a plurality of holes, wherein the pin-shaped elements are configured to pass through the holes upon the movement of the shearing unit relative to the retaining unit. The cover element is beneficial for maintaining the object within the retaining unit as the pin-shaped elements move out of the object and out of the retaining unit. This is particularly helpful, if the retaining unit is utilized for separating the object from the flavoured beverage after the application of the shearing unit to the object and/or after dispensing the flavour into the liquid.

The cover element can be configured as a top cover arranged at a top of the retaining unit. This is advantageous for retaining the object within the retaining unit during and after an upward movement of the pin-shaped elements out of the object and away from the object.

Alternatively or additionally the cover element can be configured as a bottom wall of the retaining unit. This is beneficial if during the application of the shearing unit to the object the pin-shaped elements penetrate into the object through the bottom wall of the retaining unit. Also in this configuration, the cover element is advantageous for retaining the object or at least one piece of the object within the retaining unit, as the pin-shaped elements are removed in a downward direction.

Preferably, the preparation device comprises an end part placed on a top opening of the container, wherein the end part has at least one guide element configured to guide a guide portion of the shearing unit upon the movement of the shearing unit relative to the retaining unit. This goes along with a particularly simple construction of the preparation device. In particular, a very simple container can be utilized for the preparation device. For example, the container can be configured as a tube with one open end at the top and a closed end at the bottom. Such a tubular container can be readily utilized to serve the flavour beverage. This is advantageous.

A portion of the shearing unit, which the user can push down for making elements, in particular the pin-shaped elements, penetrate into the object can be referred to as an actuation element of the shearing unit. Such an actuation element can in particular be configured like a button to be pressed down by the user.

According to the present invention, the preparation device comprises an actuation element placed on a top opening of an insert, wherein the insert of the preparation device is arranged in the container. Herein, the actuation element is movable with respect to the insert, wherein the actuation element is configured to move the retaining unit relative to the insert and relative to the shearing unit. Such a preparation device also enables a good extraction of flavour from the object into the liquid.

Preferably, the ultrasound generating unit comprises a shaft element configured to emit the ultrasonic waves into the liquid, wherein the shaft element is arranged in a central region of the retaining unit. This enables the ultrasonic waves to very extensively interfere with the object placed in the retaining unit. Further, the shaft element can be utilized as a guide element upon a movement of the shearing unit relative to the retaining unit. This is also advantageous.

The ultrasound generating unit can be arranged at an end part of the preparation device, wherein the end part is placed on a top opening of the container, and the shaft element extends towards a bottom wall of the container. Consequently, a base of the shaft element is closer to a top of the end part than a free end of the shaft element. In such a configuration an assembly comprising the end part, the ultrasound generating unit and the shearing unit can be readily removed from the top opening of the container after the preparation of the flavoured beverage. Consequently, a very simple container can be utilized for the preparation device.

Alternatively, the ultrasound generating unit can be arranged at a bottom part of the container, wherein the shaft element extends towards a top opening of the container. A base of the shaft element is thus closer to the bottom part of the container than a free end of the shaft element. In this configuration, the container has an increased stability as the ultrasound generating unit is arranged at the bottom part of the container. Further, this arrangement of the ultrasound generating unit at the bottom part of the container makes it very simple to provide electrical energy to the ultrasound generating unit.

Preferably, the retaining unit is configured as a basket with a plurality of openings in walls of the basket. This makes it particularly simple to retain the object in particular in the form at least one fruit in the basket during the utilization of the preparation device and to let the liquid get in contact with the object in the basket.

Preferably, a bottom wall of the basket is arranged spaced apart from a bottom of the container for the liquid at least in an initial state of the preparation device. This enables a very good transfer of flavour from the object arranged in the basket into the liquid below the basket. This is advantageous for an intense flavouring of the liquid.

Preferably, at least a peripheral wall of the container is made from a transparent material. This advantageously enables the user to supervise the preparation of the flavoured beverage. The user can for example supervise an increase in turbidity of the beverage during its preparation and stop the preparation process when the turbidity of the flavoured beverage has reached an intended level.

In particular, the container can be made from a transparent plastic material and/or from a transparent glass material. The utilization of the glass material for at least a part of the container is particularly beneficial for a food-save preparation of the flavoured beverage.

The features and feature combinations mentioned above in the description as well as the features and feature combinations mentioned below in the description of figures and/or shown in the figures alone are usable not only in the respectively specified combination, but also in other combinations or alone, without departing from the scope of the invention, which is defined by the appended claims.

Further advantages, features and details of the invention are apparent from the claims, the following description of preferred embodiments as well as based on the drawings in which features having analogous functions are designated with the same reference signs. Therein show:
- Fig. 1: a schematic, perspective view of a preparation device for preparing a fruit flavoured beverage, wherein slices of a fruit are arranged in a retaining unit of the preparation device;
- Fig. 2: a container of the preparation device, wherein the container is configured as cylinder with a top opening and a closed bottom;
- Fig. 3: an exploded view of one variant of the preparation device;
- Fig. 4: the preparation device according to Fig. 3 in a assembled initial state;
- Fig. 5: a schematic sectional view of a part of the preparation device according to Fig. 4; and
- Fig. 6: another variant of the preparation device, wherein the retaining unit can be pushed down by the user.

The indications "upper", "lower", "top", "front", "bottom", "floor", "horizontal", "vertical", "depth direction", "width direction", "height direction" and the like refer to the positions and orientations of the device in its intended use position with respect to an observer located in front of the device and regarding towards the device.

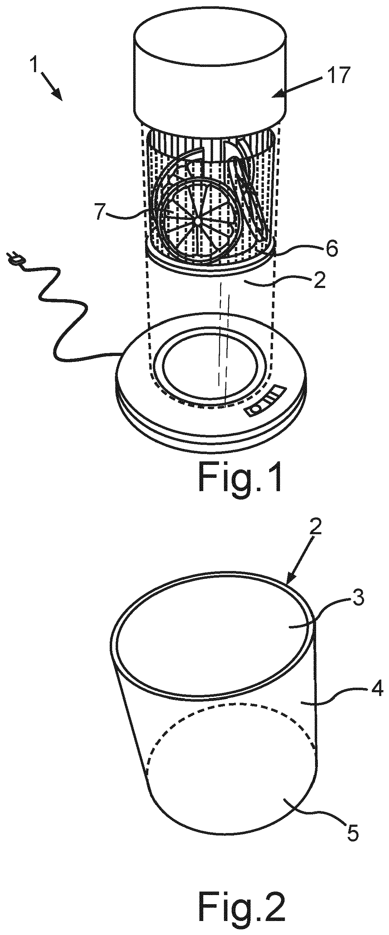

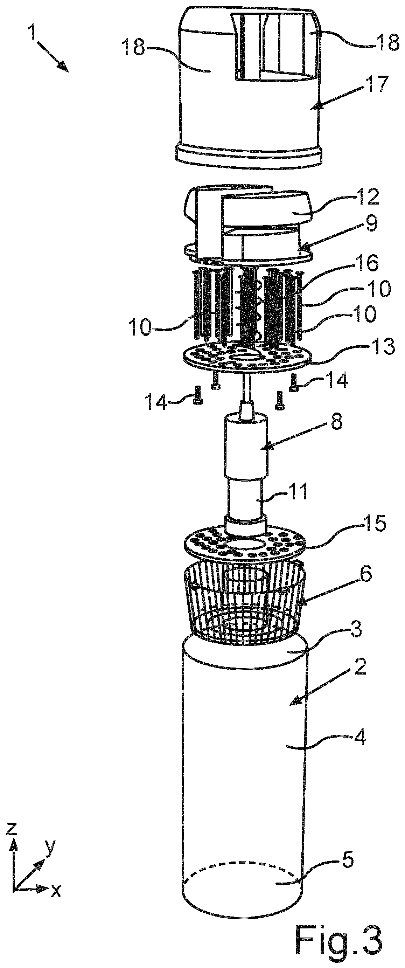

Fig. 1 schematically shows a preparation device 1 for preparing a flavoured beverage. The preparation device 1 comprises a container 2 for a liquid of the beverage. The container 2 is also shown in Fig. 2 and in Fig. 3 and can in particular be configured as a bottle of glass or as a cylinder preferably made from a transparent material such as glass. The container 2 has a top opening 3. In the variant of the preparation device 1 shown in Fig. 1 and Fig. 3 the container 2 has a peripheral wall 4 and a bottom 5 made of a transparent material, for example made from glass.

The preparation device 1 further comprises a retaining unit 6 in which at least one object 7 can be placed. As an example of the object 7, pieces of a fruit such as a citrus fruit are exemplarily shown in Fig. 1. In contrast, the retaining unit 6 which can be configured as a basket is shown without the object 7 or fruit inside in Fig. 3.

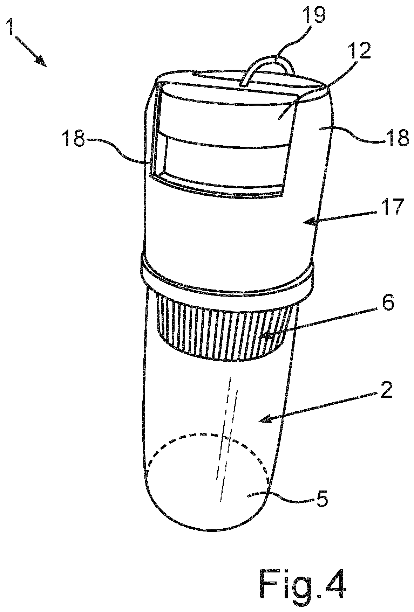

In the variant of the preparation device 1 shown in Fig. 3 the preparation device 1 comprises the retaining unit 6, wherein the retaining unit 6 can be arranged at the top opening 3 of the container 2 (see Fig. 4). The preparation device 1 further comprises an ultrasound generating unit 8 configured to produce ultrasonic waves in the liquid arranged in the container 2 during the preparation of the flavoured beverage.

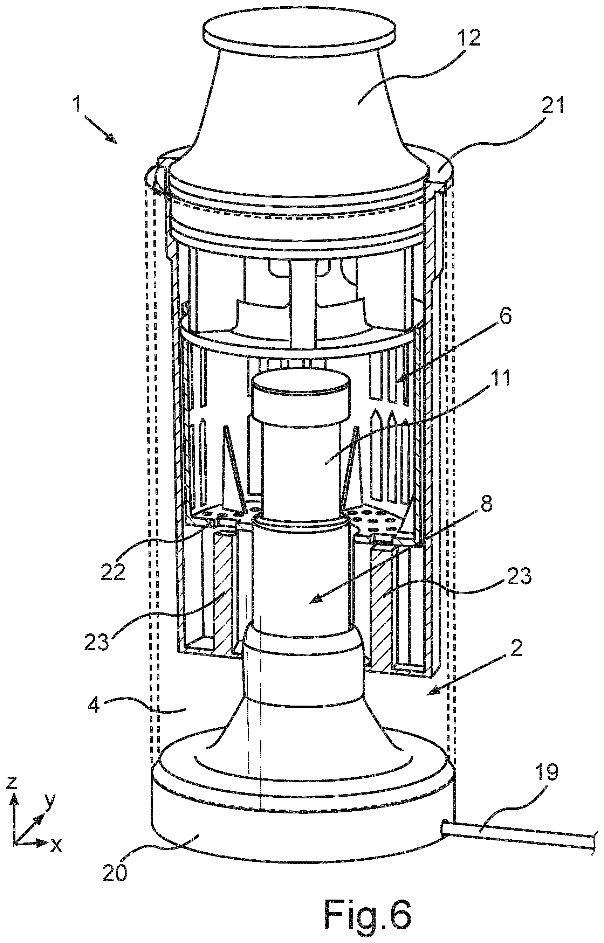

The preparation device 1 also comprises a shearing unit 9, which in the variant shown in Fig. 3 is movable relative to the retaining unit 6 in a height direction z of the container 2. The height direction z as well as a width direction x and a depth direction y of the preparation device 1 are indicated by a coordinate system in Fig. 3 and in Fig. 6.

The shearing unit 9 preferably comprises a plurality of pin-shaped elements 10 which can be in particular be provided by nails or needles or the like. For reasons of clarity, only some of the pin-shaped elements 10 of the shearing unit 9 are provided with a reference sign in the figures. When the shearing unit 9 is moved downwards, the pin-shaped elements 10 can penetrate into the object 7 (see Fig. 1) placed within the retaining unit 6.

This piercing operation or shearing operation provided by the pin-shaped elements 10 or nails or needles significantly increases the surface of the object 7 (see Fig. 1) exposed to the liquid contained in the container 2.

Operating the ultrasound generating unit 8 produces ultrasonic waves in the liquid, in particular in the water which present in the container 2. Due to the operation of the ultrasound generating unit 8 compression waves are created in the water which lead to the formation of a multitude of very small voids or vacuum bubbles which are also referred to as cavitations. This cavitation effect provided by the operation of the ultrasound generating unit 8 significantly enhances the release of flavour from the object 7 (see Fig. 1) into the water which is present in the container 2. And as the pin-shaped elements 10 of the shearing unit 9 increase the surface of the object 7 in contact with the water, a particularly large area of the object 7 is exposed to the ultrasonic waves produced by the ultrasound generating unit 8.

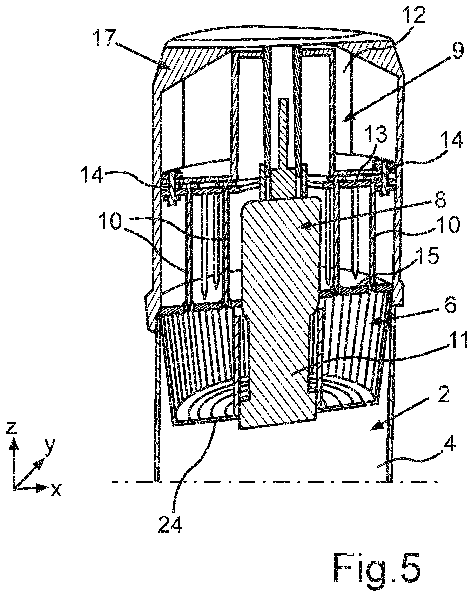

In the variant of the preparation device 1 shown in Fig. 3 the ultrasound generating unit 8 comprises a shaft element 11 which is arranged in a central region of the retaining unit 6 (see Fig. 5). Therefore, the fruit or object 7 present in the retaining unit 6 or basket can be arranged around the shaft element 11 of the ultrasound generating unit 8 during the preparation of the flavoured beverage. The shaft element 11 can emit ultrasonic waves into the liquid contained in the container 2 during the activation of the ultrasound generating unit 8.

Preferably, the pin-shaped elements 10 can penetrate into the object 7 placed within the retaining unit 6 as the shearing unit 9 is pushed down by the user of the preparation device 1. For this purpose, the shearing unit 9, can comprise an actuation element 12 which can be pushed down by the user. From a bottom side of the actuation element 12 the pin-shaped elements 10 extend downwards.

According to Fig. 3 the shearing unit 9 can comprise a bottom plate 13, which is fixed to a bottom side of the actuation element 12. Shaft parts with pointed ends of the pin-shaped elements 10 extend downwards trough the bottom plate 13 as can be seen from Fig. 5. Fixation elements such as screws 14 can be utilized to fix the bottom plate 13 to the bottom side of the actuation element 12.

Fig. 3 further shows a cover element 15 having a plurality of holes corresponding to the pin-shaped elements 10. The cover element 15 is configured as a top cover arranged at the top of the retaining unit 6 in the assembled state of the preparation device 1 (see Fig. 5). If the user pushes the shearing unit 9 downwards by applying a downwardly directed force to the actuation element 12, the pin-shaped elements 10 or nails or needles penetrate into the at least one object 7 (see Fig. 1) contained in the retaining unit 6 or basket.

As can be seen in particular from Fig. 5 a bottom wall 24 of the retaining unit 6 or basket shown in Fig. 5 can be arranged spaced apart from the bottom 5 of the container 2. This allows flavour from the object 7 (see Fig. 1) to get very easily and extensively into the liquid placed in the container 2. The bottom wall 24 and peripheral walls of the retaining unit 6 preferably have a multitude of openings, for example in the form of slits, which allow a good access of the water inside the container 2 to the object 7 placed in the retaining unit 6. The peripheral walls of the retaining unit 6 circumferentially surround the shaft element 11 of the ultrasound generating unit 8.

Fig. 3 further shows a return element, in particular be a return spring 16, which is configured to move the shearing unit 9 into a starting position shown in Fig. 5. In this starting position of the shearing unit 9 the pin-shaped elements 10 are for the most part placed above the cover element 15 and do not yet extend into the retaining unit 6 or basket. As the user pushes the shearing unit 9 downwards by applying a downwardly directed pressure to the actuation element 12, the shaft parts of the pin-shaped elements 10 pass through the cover element 15 and then pierce the pieces of fruit or the at least one object 7 placed in the basket or retaining unit 6.

After this pushing action and/or during this pushing action electrical energy can provided to the ultrasound generating unit 8 in order to produce ultrasonic waves in the liquid contained in the container 2.

According to Fig. 3 the preparation device 1 further comprises an end part 17 that can be placed on the top opening 3 of the container 2. The end part 17 comprises at least one guide element 18 configured to guide a guide portion of the shearing unit 9 upon the movement of the shearing unit 9 relative to the retaining unit 6. For example, the guide elements 18 shown in Fig. 3 and in Fig. 4 can guide the actuation element 12 when the actuation element 12 is pushed downwards by the user. In the variant of the preparation device 1 shown in Fig. 3 and in Fig. 5 the end part 17 holds the ultrasound generating unit 8 such that a free end of the shaft element 11 is closer to the bottom 5 of the container 2 than a base part of the shaft element 11.

According to Fig. 4 a power supply line 19 of the preparation device 1 can be utilized to provide electrical energy to the ultrasound generating unit 8. In the configuration shown in Fig. 4 the power supply line 19 passes through the end part 17 and is connected to the ultrasound generating unit 8.

The preparation device 1 shown in Fig. 3 and Fig. 4 can in particular be utilized as will be described in the following. In a first step, a liquid such as water can be filled into the container 2. At least one fruit or such an object 7 (see Fig. 1) for flavouring the water can be placed in the retaining unit 6 or basket. The retaining unit 6 is arranged at the top opening 3 of the container 2 such that the retaining unit 6 is partially immersed in the water contained in the container 2. The at least one fruit or object 7 can be put in the retaining unit 6 before and/or after arranging the retaining unit 6 at the top opening 3 of the container 2. Finally an assembly comprising the end part 17, the ultrasound generating unit 8 and the shearing unit 9 is placed on the top opening 3 of the container 2 such that the preparation device 1 is closed towards the environment.

When the user pushes down the shearing unit 9 by pressing the actuation element 12 downwards, the pin-shaped elements 10 or nails penetrate into the object 7. In this way, the surface of the object 7, which can be exposed to the ultrasonic waves, can be increased. The ultrasound generating unit 8 can be switched on such that the ultrasonic waves can act upon the partly damaged object 7 (or fruit) placed in the retaining unit 6 or basket.

The ultrasound generating unit 8 can be activated for a time predetermined by a control unit (not shown) of the preparation device 1 and/or for a time specified by the user. For example, the ultrasound generating unit can be active during a period of about 5 minutes to about 15 minutes. However shorter time spans or longer time spans can be utilized, in particular depending on the intention of the user.

After the ultrasound generating unit 8 has been switched off by the user or automatically the assembly comprising the end part 17, the shearing unit 9 and the ultrasound generating unit 8 can be removed from the container 2, while the retaining unit 6 or basket remains arranged at the top opening 3 of the container 2. The flavoured beverage can be served either with the retaining unit 6 arranged at the top opening 3 of the container 2 or after removal of the retaining unit 6 from the container 2.

Fig. 6 shows an alternative design or alternative variant of the preparation device 1. Also in this variant, the container 2 has a peripheral wall 4, which is preferably made from a transparent material. However, the ultrasound generating unit 8 is arranged at a bottom part 20 of the container 2, wherein the bottom part 20 closes the container 2 at its bottom side. In this variant, the shaft element 11 of the ultrasound generating unit 8 extends towards the top opening 3 of the container 2. Thus a base of the shaft element 11 is closer to the bottom part 20 of the container 2 than a free end of the shaft element 11. In other words, the shaft element 11 is inserted into the retaining unit 6 of the preparation device 1 from below and not from above as explained with reference to the variant shown for example in Fig. 3. According to Fig. 6 the shaft element 11 is preferably arranged in a central region of the retaining unit 6.

In the variant shown in Fig. 6 the power supply line 19 passes into the bottom part 20 of the preparation device 1. Further, an insert 21 is arranged in the container 2, wherein the insert 21 is inserted from the top opening 3 into the interior of the container 2. In the variant shown in Fig. 6 the actuation element 12 can be pushed downwards by the user in order to move the retaining unit 6 or basket downwards. According to Fig. 6 the retaining unit 6 can be arranged at a bottom side of the actuation element 12. By exerting pressure on the actuation element 12 the retaining unit 6 can slide downwards within a receiving space of the insert 21.

For reasons of simplicity, the pin-shaped elements of the shearing unit are not shown in Fig. 6. However, as the retaining unit 6 is pushed downwards, the pin-shaped elements pass through a bottom wall 22 of the retaining unit 6. To this end, the pin-shaped elements can be fixed to the insert 21, in particular to a bottom of the insert 21. Alternatively or additionally, the pin-shaped elements can extend from the bottom part 20 of the container 2 upwards to the bottom wall 22 of the retaining unit 6. The insert 21 can have guide elements 23 guiding the retaining unit 6 as the retaining unit 6 is pushed downwards by the user.

Also in the variant of the preparation device 1 shown in Fig. 6 the user can effect a linear movement of the shearing unit comprising the pin-shaped elements relative to the retaining unit 6 such that the object 7 (see Fig. 1) or a fruit can be penetrated or pierced by the pin-shaped elements when the user pushes the actuation element 12 downwards.

Advantageously, the preparation device 1 can be produced at a particularly low cost due to the simplicity of the components. The flavoured beverages that can be obtained by utilizing the preparation device 1 have properties that can be analysed by measuring parameters and from a sensorial point of view, in particular regarding taste and appearance. Such analyses have shown that the use of the shearing unit 9 together with the ultrasound generating unit 8 can greatly enhance the dispensing of flavour into the liquid of the beverage.

For example, conductivity measures have shown that compared to an ultrasound treatment alone and compared to a mechanical interference with the object 7 alone the combination of the action of the shearing unit 9 and the ultrasound generating unit 8 leads to a considerably higher conductivity in a given period of time.

The same applies if turbidity measures are performed on samples prepared by utilizing the preparation device 1 compared to samples in which only ultrasonic waves or only mechanical treatment of the object 7 has taken place. By utilizing the action of the shearing unit 9 and the ultrasound generating unit 8 a considerably higher turbidity of the beverage can be achieved in a given period of time.

In particular, if the fruit or object 7 (see Fig. 1) placed in the container 2 contains acid also changes in the pH can be observed over time. In this respect it is mainly the piercing of the fruit, which contributes to lowering the pH value. However, utilizing the shearing unit 9 and additionally the ultrasound generating unit 8 leads to an even more significant decrease of the pH value than a mechanical treatment of the fruit alone.

Further, sensorial analyses showed the beneficial effects of utilizing both the ultrasound generating unit 8 and the shearing unit 9. This applies to a preference with regard to the flavour, the order and the appearance of the obtained beverage. Also, the general preference is increased, if both the ultrasound generating unit 8 and the shearing unit 9 are utilized for dispensing flavour into the liquid of the beverage.

In particular, the preparation time can be significantly reduced when the ultrasound generating unit 8 is utilized together with the shearing unit 9 for preparing the flavoured beverage. For example, with respect to appearance, order, flavour and general preference of the prepared beverage a good result could be obtained after 15 minutes of utilization of the ultrasound generating unit 8, if additionally the shearing unit 9 has been utilized to increase the surface of the fruit. In a sample prepared by only penetrating into the object 7 or fruit but without the utilization of the ultrasound generating unit 8 a time span of 30 minutes was necessary in order to achieve approximately the same result with regard to appearance, order, flavour and general preference.

As can be seen from the performed analyses, combining the effect of the ultrasound generating unit 8 and the shearing unit 9 for dispensing flavour into the liquid leads to a highly appreciated flavoured beverage, for example in the form of fruit flavoured water. Consequently, the utilization of these technologies in the preparation device 1 enables the preparation of a very pleasant flavoured beverage.

### List of reference signs

- 1: preparation device
- 2: container
- 3: top opening
- 4: peripheral wall
- 5: bottom
- 6: retaining unit
- 7: object
- 8: ultrasound generator
- 9: shearing unit
- 10: pin-shaped element
- 11: shaft element
- 12: actuation element
- 13: bottom plate
- 14: screw
- 15: cover element
- 16: return spring
- 17: end part
- 18: guide element
- 19: power supply line
- 20: bottom part
- 21: insert
- 22: bottom wall
- 23: guide element
- 24: bottom wall

## Claims

1. Preparation device (1) for preparing a flavoured beverage, comprising a container (2) for a liquid of the beverage and an ultrasound generating unit (8) configured to produce ultrasonic waves in the liquid, and with a shearing unit (9) configured to penetrate into a fruit (7) which can be placed within the container (2) for dispensing flavour into the liquid, wherein the preparation device (1) comprises a retaining unit (6) configured for holding the fruit (7) in place during the application of the shearing unit (9) to the fruit (7), wherein the retaining unit (6) is configured for separating at least one piece of the fruit (7) from the flavoured beverage, **characterized in that** the preparation device (1) comprises an actuation element (12) placed on a top opening of an insert (21) which is arranged in the container (2), wherein the actuation element (12) is movable with respect to the insert (21) and wherein the actuation element (12) is configured to move the retaining unit (6) relative to the insert (21) and relative to the shearing unit (9).

2. Preparation device (1) according to claim 1, **characterized in that** the shearing unit (9) is movable relative to the retaining unit (6) in a height direction (z) of the container (2) during the application of the shearing unit (9) to the fruit (7).

3. Preparation device (1) according to claim 1 or 2, **characterized in that** a linear movement of the shearing unit (9) relative to the retaining unit (6) can be effected by a user of the preparation device (1) by pushing at least one of the shearing unit (9) and the retaining unit (6), wherein the preparation device (1) preferably comprises a return element (16) configured to move the at least one of the shearing unit (9) and the retaining unit (6) into a starting position when the user stops the pushing.

4. Preparation device (1) according to any one of the preceding claims, **characterized in that** the shearing unit comprises a plurality of pin-shaped elements (10) configured to penetrate into the fruit (7) upon a movement of the shearing unit (9) relative to the retaining unit (6).

5. Preparation device (1) according to claim 4, **characterized in that** the preparation device (1) comprises a cover element (15) with a plurality of holes, wherein the pin-shaped elements (10) are configured to pass through the holes upon the movement of the shearing unit (9) relative to the retaining unit (6).

6. Preparation device (1) according to claim 5, **characterized in that** the cover element (15) is configured as a top cover arranged at a top of the retaining unit (6) and/or the cover element is configured as a bottom wall (22) of the retaining unit (6).

7. Preparation device (1) according to claim 2 or 3, **characterized in that** the preparation device (1) comprises an end part (17) placed on a top opening (3) of the container (2), wherein the end part (17) has at least one guide element (18) configured to guide a guide portion of the shearing unit (9) upon the movement of the shearing unit (9) relative to the retaining unit (6).

8. Preparation device (1) according to any one of the preceding claims, **characterized in that** the ultrasound generating unit (9) comprises a shaft element (11) configured to emit the ultrasonic waves into the liquid, wherein the shaft element (11) is arranged in a central region of the retaining unit (6).

9. Preparation device (1) according to claim 8, **characterized in that** the ultrasound generating unit (8) is arranged at an end part (17) of the preparation device (1), wherein the end part (17) is placed on a top opening (3) of the container (2) and the shaft element (11) extends towards a bottom wall (5) of the container (2), or the ultrasound generating unit (8) is arranged at bottom part (20) of the container (2), wherein the shaft element (11) extends towards a top opening (3) of the container (2).

10. Preparation device (1) according to any one of the preceding claims, **characterized in that** the retaining unit (6) is configured as a basket with a plurality of openings in walls of the basket, wherein a bottom wall (22, 24) of the basket is preferably arranged spaced apart from a bottom (5, 20) of the container (2) for the liquid at least in an initial state of the preparation device (1).

11. Preparation device (1) according to any one of the preceding claims, **characterized in that** at least a peripheral wall (4) of the container (2) is made from a transparent material.

## Patentansprüche

1. Zubereitungsvorrichtung (1) zum Zubereiten eines aromatisierten Getränks, die einen Behälter (2) für eine Getränkeflüssigkeit und eine Ultraschallerzeugungseinheit (8) umfasst, welche so ausgelegt ist, dass sie in der Flüssigkeit Ultraschallwellen erzeugt, und mit einer Schneideinheit (9), die so ausgelegt ist, dass sie in eine Frucht (7) eindringt, welche in den Behälter (2) gelegt werden kann, um der Flüssigkeit Aroma zu verleihen, wobei die Zubereitungsvorrichtung (1) eine Halteeinheit (6) umfasst, die so ausgelegt ist, dass sie beim Anwenden der Schneideinheit (9) an der Frucht (7) diese festhält, wobei die Halteeinheit (6) so ausgelegt ist, dass sie mindestens ein Stück der Frucht (7) von dem aromatisierten Getränk trennt, **dadurch gekennzeichnet, dass** die Zubereitungsvorrichtung (1) ein Betätigungselement (12) umfasst, das an einer oberen Öffnung eines im Behälter (2) angeordneten Einsatzes (21) platziert ist, wobei das Betätigungselement (12) in Bezug auf den Einsatz (21) beweglich ist und das Betätigungselement (12) so ausgelegt ist, dass es die Halteeinheit (6) in Bezug auf den Einsatz (21) und die Schneideinheit (9) bewegen kann.

2. Zubereitungsvorrichtung (1) nach Anspruch 1, **dadurch gekennzeichnet, dass** die Schneideinheit (9) beim Anwenden der Schneideinheit (9) auf die Frucht (7) in Bezug auf die Halteeinheit (6) in einer Höhenrichtung (z) des Behälters (2) beweglich ist.

3. Zubereitungsvorrichtung (1) nach Anspruch 1 oder 2, **dadurch gekennzeichnet, dass** von einem Benutzer der Zubereitungseinheit (1) durch Drücken der Schneideinheit (9) und/oder der Halteeinheit (6) eine lineare Bewegung der Schneideinheit (9) in Bezug auf die Halteeinheit (6) bewirkt werden kann, wobei die Zubereitungsvorrichtung (1) vorzugsweise ein Rückführelement (16) umfasst, das so ausgelegt ist, dass es die Schneideinheit (9) und/oder die Halteeinheit (6) in eine Ausgangsposition zurückbringt, wenn der Benutzer aufhört zu drücken.

4. Zubereitungsvorrichtung (1) nach einem der vorhergehenden Ansprüche, **dadurch gekennzeichnet, dass** die Schneideinheit mehrere stiftförmige Elemente (10) umfasst, die so ausgelegt sind, dass sie bei einer Bewegung der Schneideinheit (9) in Bezug auf die Halteeinheit (6) in die Frucht (7) eindringen.

5. Zubereitungsvorrichtung (1) nach Anspruch 4, **dadurch gekennzeichnet, dass** die Zubereitungsvorrichtung (1) ein Abdeckelement (15) mit mehreren Löchern umfasst, wobei die stiftförmigen Elemente (10) so ausgelegt sind, dass sie sich durch die Löcher hindurch bewegen, wenn sich die Schneideinheit (9) in Bezug auf die Halteeinheit (6) bewegt.

6. Zubereitungsvorrichtung (1) nach Anspruch 5, **dadurch gekennzeichnet, dass** das Abdeckelement (15) als obere Abdeckung, die oben auf der Halteeinheit (6) angeordnet ist, und/oder als Bodenwand (22) der Halteeinheit (6) ausgelegt ist.

7. Zubereitungsvorrichtung (1) nach Anspruch 2 oder 3, **dadurch gekennzeichnet, dass** die Zubereitungsvorrichtung (1) ein Endteil (17) umfasst, das an einer oberen Öffnung (3) des Behälters (2) platziert ist, wobei das Endteil (17) mindestens ein Führungselement (18) aufweist, das so ausgelegt ist, dass es einen Führungsabschnitt der Schneideinheit (9) führt, wenn sich die Schneideinheit (9) in Bezug auf die Halteeinheit (6) bewegt.

8. Zubereitungsvorrichtung (1) nach einem der vorhergehenden Ansprüche, **dadurch gekennzeichnet, dass** die Ultraschallerzeugungseinheit (9) ein Schaftelement (11) umfasst, das so ausgelegt ist, dass es die Ultraschallwellen in die Flüssigkeit aussendet, wobei das Schaftelement (11) in einem mittleren Bereich der Halteeinheit (6) angeordnet ist.

9. Zubereitungsvorrichtung (1) nach Anspruch 8, **dadurch gekennzeichnet, dass** die Ultraschallerzeugungseinheit (8) an einem Endteil (17) der Zubereitungsvorrichtung (1) angeordnet ist, wobei das Endteil (17) an einer oberen Öffnung (3) des Behälters (2) platziert ist und das Schaftelement (11) zu einer Bodenwand (5) des Behälters (2) hin verläuft oder die Ultraschallerzeugungseinheit (8) an einem Unterteil (20) des Behälters (2) angeordnet ist, wobei das Schaftelement (11) zu einer oberen Öffnung (3) des Behälters (2) hin verläuft.

10. Zubereitungsvorrichtung (1) nach einem der vorhergehenden Ansprüche, **dadurch gekennzeichnet, dass** die Halteeinheit (6) als Korb mit mehreren Öffnungen in seinen Wänden ausgelegt ist, wobei eine Bodenwand (22, 24) des Korbs zumindest in einem Ausgangszustand der Zubereitungsvorrichtung (1) vorzugsweise in einem Abstand zu einem Boden (5, 20) des Behälters (2) für die Flüssigkeit angeordnet ist.

11. Zubereitungsvorrichtung (1) nach einem der vorhergehenden Ansprüche, **dadurch gekennzeichnet, dass** zumindest eine Umfangswand (4) des Behälters (2) aus einem transparenten Material hergestellt ist.

## Revendications

1. Dispositif de préparation (1) destiné à préparer une boisson aromatisée, comprenant un récipient (2) pour un liquide de la boisson et une unité de génération d'ultrasons (8) configurée pour produire des ondes ultrasonores dans le liquide, ainsi qu'une unité de cisaillement (9) configurée pour pénétrer dans un fruit (7) qui peut être placé à l'intérieur du récipient (2) afin de libérer des substances aromatiques dans le liquide, dans lequel le dispositif de préparation (1) comprend une unité de rétention (6) configurée pour maintenir le fruit (7) en place pendant l'application de l'unité de cisaillement (9) sur le fruit (7),
dans lequel l'unité de rétention (6) est configurée pour séparer de la boisson aromatisée au moins un morceau du fruit (7),
**caractérisé en ce que** le dispositif de préparation (1) comprend un élément d'actionnement (12) placé sur une ouverture supérieure d'un insert (21) disposé dans le récipient (2),
dans lequel l'élément d'actionnement (12) est mobile par rapport à l'insert (21) et dans lequel l'élément d'actionnement (12) est configuré pour déplacer l'unité de rétention (6) par rapport à l'insert (21) et par rapport à l'unité de cisaillement (9).

2. Dispositif de préparation (1) selon la revendication 1, **caractérisé en ce que** l'unité de cisaillement (9) est mobile par rapport à l'unité de rétention (6) suivant une direction de hauteur (z) du récipient (2) pendant l'application de l'unité de cisaillement (9) sur le fruit (7).

3. Dispositif de préparation (1) selon la revendication 1 ou 2, **caractérisé en ce qu'**un déplacement linéaire de l'unité de cisaillement (9) par rapport à l'unité de rétention (6) peut être réalisé par un utilisateur du dispositif de préparation (1) en exerçant une poussée sur au moins l'une de l'unité de cisaillement (9) et de l'unité de rétention (6), dans lequel le dispositif de préparation (1) comprend de préférence un élément de rappel (16) configuré pour déplacer au moins l'une de l'unité de cisaillement (9) et de l'unité de rétention (6) vers une position initiale lorsque l'utilisateur cesse d'exercer la poussée.

4. Dispositif de préparation (1) selon l'une quelconque des revendications précédentes, **caractérisé en ce que** l'unité de cisaillement comprend une pluralité d'éléments en forme de broche (10) configurés pour pénétrer dans le fruit (7) lors du déplacement de l'unité de cisaillement (9) par rapport à l'unité de rétention (6).

5. Dispositif de préparation (1) selon la revendication 4, **caractérisé en ce que** le dispositif de préparation (1) comprend un élément de recouvrement (15) comprenant une pluralité d'orifices, dans lequel les éléments en forme de broche (10) sont configurés pour passer à travers les orifices lors du déplacement de l'unité de cisaillement (9) par rapport à l'unité de rétention (6).

6. Dispositif de préparation (1) selon la revendication 5, **caractérisé en ce que** l'élément de recouvrement (15) est configuré sous forme d'un couvercle supérieur disposé au sommet de l'unité de rétention (6) et/ou l'élément de recouvrement est configuré sous la forme d'une paroi de fond (22) de l'unité de rétention (6).

7. Dispositif de préparation (1) selon la revendication 2 ou 3, **caractérisé en ce que** le dispositif de préparation (1) comprend une pièce d'extrémité (17) disposée sur une ouverture supérieure (3) du récipient (2), dans lequel la pièce d'extrémité (17) comprend au moins un élément de guidage (18) configuré pour guider une partie de guidage de l'unité de cisaillement (9) lors du déplacement de l'unité de cisaillement (9) par rapport à l'unité de rétention (6).

8. Dispositif de préparation (1) selon l'une quelconque des revendications précédentes, **caractérisé en ce que** l'unité de génération d'ultrasons (9) comprend un élément d'arbre (11) configuré pour émettre les ondes ultrasonores dans le liquide, dans lequel l'élément d'arbre (11) est disposé dans une région centrale de l'unité de rétention (6).

9. Dispositif de préparation (1) selon la revendication 8, **caractérisé en ce que** l'unité de génération d'ultrasons (8) est disposée au niveau d'une pièce d'extrémité (17) du dispositif de préparation (1), dans lequel la pièce d'extrémité (17) est placée sur une ouverture supérieure (3) du récipient et l'élément d'arbre (11) s'étend vers une paroi de fond (5) du récipient (2), ou l'unité de génération d'ultrasons (8) est disposée au niveau d'une partie inférieure (20) du récipient (2), l'élément d'arbre (11) s'étendant vers une ouverture supérieure (3) du récipient (2).

10. Dispositif de préparation (1) selon l'une quelconque des revendications précédentes, **caractérisé en ce que** l'unité de rétention (6) est configurée sous la forme d'un panier comprenant une pluralité d'ouvertures ménagées dans les parois du panier, dans lequel une paroi de fond (22, 24) du panier est de préférence espacée du fond (5, 20) du récipient (2) de liquide au moins dans un état initial du dispositif de préparation (1).

11. Dispositif de préparation (1) selon l'une quelconque des revendications précédentes, **caractérisé en ce qu'**au moins une paroi périphérique (4) du récipient (2) est constituée d'un matériau transparent.
